# EUROPÄISCHE PATENTSCHRIFT

(11) **EP 0 526 859 B1**
(45) Veröffentlichungstag und Bekanntmachung des Hinweises auf die Patenterteilung: **29.11.1995**
(21) Anmeldenummer: 92113150.4
(22) Anmeldetag: 01.08.1992
(51) Int. Cl.: B60Q 1/04

(54) **Anordnung zur verstellbaren Befestigung eines Fahrzeugscheinwerfers**
Adjustable fixing device for headlamp
Dispositif de fixation orientable pour phare de véhicule

(30) Priorität: 07.08.1991 DE 4126112
(43) Veröffentlichungstag der Anmeldung: 10.02.1993
(73) Patentinhaber: Hella KG Hueck & Co., 59552 Lippstadt (DE)
(72) Erfinder: Mohsakowski, Klaus, W-4780 Lippstadt (DE); Brummel, Reinhold, W-4783 Anröchte 3 (DE)

(56) Entgegenhaltungen:
- DE-A- 3 324 134
- DE-A- 3 801 500

## Beschreibung

Die Erfindung bezieht sich auf die Anordnung zur verstellbaren Befestigung eines Fahrzeugscheinwerfers, außen an der Fahrzeugkarosserie, mit folgenden Merkmalen:
- ein aus Kunststoff hergestellter, U-förmiger Bügel ist mit seinem die beiden Schenkel verbindenden Steg an der Fahrzeugkarosserie festsetzbar und umfaßt mit seinen Schenkeln einen aus Kunststoff hergestellten und starr mit dem Scheinwerfer verbundenen Ansatz,
- eine quer zur optischen Achse des Scheinwerfers verlaufende Schwenkachse ist durch einen von den Schenkeln des U-förmigen Bügels getragenen Schraubenbolzen festgelegt, welcher durch eine einen größeren Durchmesser als der Schraubenbolzen aufweisende Durchgangsöffnung des Ansatzes hindurchgeht,
- der Scheinwerfer ist durch ein kugelförmiges Gelenk, welches zwischen dem Ansatz des Scheinwerfers und dem U-förmigen Bügel besteht, allseitig um einen bestimmten Winkel verstellbar,
- das kugelförmige Gelenk ist gebildet durch jeweils eine den Schenkeln des U-förmigen Bügels zugewandte, konvexe, kalottenförmige Fläche des Ansatzes und einer den Schenkeln zugeordnete, konkave, kalottenförmige Fläche.

Eine solche Anordnung zur verstellbaren Befestigung eines Fahrzeugscheinwerfers ist aus der DE-PS 33 24 134 bekannt. Hierbei sind die kalottenförmigen Flächen des Kugelgelenks unmittelbar an den starr mit dem Scheinwerfer verbundenen Ansatz und an die Innenseiten der Schenkel des U-förmigen Bügels angeformt. Damit die Verbindung zwischen dem aus Kunststoff hergestellten Ansatz und dem aus Kunststoff hergestellten, U-förmigen Bügel ausreichend fest ist, müssen die aneinander liegenden, kalottenförmigen Flächen des Kugelgelenks entsprechend dem von dem Kugelgelenk getragenen Gewicht des Scheinwerfers groß gestaltet sein. Um den U-förmigen Bügel an dem Ansatz des Scheinwerfers montieren zu können, ist dieser aus so weichem Kunststoff hergestellt, daß seine beiden Schenkel nach außen gebogen werden können, damit die konkaven, kalottenförmigen Flächen der Innenseiten der Schenkel an die konvexen Flächen des Ansatzes anlegbar sind. Ein solcher Scheinwerfer ist wegen des weichen Werkstoffs seines U-förmigen Bügels nicht starr und stabil mit der Karosserie verbindbar.

Aufgabe der Erfindung ist es, die in dem Oberbegriff des Anspruchs 1 beschriebene Anordnung zur verstellbaren Befestigung eines Fahrzeugscheinwerfers derart zu gestalten, daß eine starre und stabile Verbindung zwischen dem Scheinwerfer und der Fahrzeugkarosserie durch die Verwendung eines Kunststoffs mit hoher Festigkeit für den U-förmigen Bügel herstellbar ist und diese starre und stabile Verbindung auch weiterhin besteht, wenn das kugelförmige Gelenk gegen mögliche Beschädigung und Verschmutzung durch eine Abdeckung geschützt ist, ohne daß die Außenabmessungen der an dem Scheinwerfer verstellbar angebrachten Teile der Anordnung größer ausfallen müssen. Darüber hinaus soll die Montage der Anordnung zur verstellbaren Befestigung eines Fahrzeugscheinwerfers, insbesondere ihres Kugelgelenks, leicht und einfach durchführbar sein.

Die Aufgabe wird nach der Erfindung dadurch gelöst, daß
- zwischen dem Ansatz und den beiden Schenkeln des U-förmigen Bügels jeweils eine auf den Schraubenbolzen aufgeschobene und aus Metall bestehende ringförmige Scheibe angeordnet ist, die auf der dem Ansatz zugewandten Seite die konkave, kalottenförmige Fläche aufweist und auf der gegenüberliegenden Seite flächig an einer senkrecht zur Schwenkachse verlaufenden Fläche des Schenkels anliegt,
- in die Durchgangsöffnung des Ansatzes eine metallische Hülse eingesetzt ist, deren Stirnflächen als konvexe, kalottenförmige Flächen ausgebildet sind, die mit den konkaven Flächen der metallischen Scheiben zusammenwirken,
- die metallischen Scheiben in eine Öffnung des aus Kunststoff hergestellten Aufnahmeteils eingesetzt sind, welches eine den Ansatz des Scheinwerfers umgebendes Schutzgehäuse bildet.

Bei einer solchen vorteilhaften Lösung muß wegen der metallischen Hülse und den metallischen Scheiben die Anordnung zur verstellbaren Befestigung eines Fahrzeugscheinwerfers trotz eines Schutzgehäuses für das Kugelgelenk nicht größer ausfallen, als wenn das Kugelgelenk unmittelbar zwischen dem aus Kunststoff hergestellten Ansatz und den Schenkeln des aus Kunststoff hergestellten, U-förmigen Bügels besteht.

Weiterhin ist es vorteilhaft, wenn der durch eine Öffnung des Aufnahmeteils in das Innere des Aufnahmeteils ragende Endabschnitt des Ansatzes den Öffnungsrand hintergreift und zwischen dem Öffnungsrand und dem Ansatz ein so großer Spalt besteht, daß der Scheinwerfer allseitig um den bestimmten Winkel verstellbar ist. Dadurch ist nicht nur das Kugelgelenk besonders gut gegen Verschmutzung und mögliche Beschädigung geschützt, sondern das Aufnahmeteil ist vor dem Aufsetzen des U-förmigen Bügels auf den Ansatz verliersicher mit dem Ansatz verbunden. Durch diese verliersichere Verbindung ist der U-förmige Bügel, ohne das Aufnahmeteil zusätzlich halten zu müssen, leicht und einfach auf das Aufnahmeteil und somit den Ansatz aufschiebbar.

Bei einer besonders vorteilhaften Weiterbildung der Erfindung ist das Aufnahmeteil einteilig aus weichem Werkstoff hergestellt. Dadurch ist das Aufnahmeteil sehr kostengünstig herstellbar und seine Montage einfach und leicht, da die Öffnung des Aufnahmeteils unter elastischer Verformung so weit aufweitbar ist, daß es über einen dicker ausgeführten Endabschnitt des Ansatzes stülpbar ist.

Bei einer anderen vorteilhaften Weiterbildung der Erfindung ist das Aufnahmeteil zweiteilig ausgeführt. Dadurch kann das Aufnahmeteil aus einem Werkstoff mit hoher Festigkeit hergestellt werden. In diesem Zusammenhang ist es weiterhin vorteilhaft, wenn die beiden Teile des zweiteiligen Aufnahmeteils an ihren Anlageflächen ineinandergreifende Steckelemente aufweisen. Hierbei ist es zweckmäßig, wenn zumindest eine Verbindung zwischen den Steckelementen selbstklemmend oder selbstrastend ausgeführt ist. Dadurch ist sowohl eine einfache und leichte Montage der beiden Teile des Aufnahmeteils möglich als auch das als Schutzgehäuse dienende Aufnahmeteil sehr stabil. Außerdem können die Außenflächen an den aneinanderliegenden Flächen der beiden Teile des Aufnahmeteils bündig zueinander verlaufen. Ein symmetrischer Aufbau beider Aufnahmeteile ist möglich, wenn die aneinanderliegenden Flächen der beiden Teile des Aufnahmeteils quer zur Schwenkachse und zwischen den metallischen Scheiben verlaufen.

Weiterhin ist es vorteilhaft, wenn die metallischen Scheiben in entsprechend große Öffnungen des Aufnahmeteils eingesetzt sind. Dadurch dient das Aufnahmeteil vor dem Aufschieben des U-förmigen Bügels auf das Aufnahmeteil als Halterungsteil für die metallischen Scheiben. Hierbei ist es weiterhin zweckmäßig, wenn die beiden metallischen Scheiben von der Außenseite des Aufnahmeteils her in die Öffnungen des Aufnahmeteils eingesetzt sind und mit einem äußeren umlaufenden Flansch an einer als Anschlag dienenden Schulter der Innenseite der Öffnung des Aufnahmeteils anliegen, und wenn das Aufnahmeteil mit Spiel zwischen die Schenkel des U-förmigen Bügels eingesetzt ist. Dadurch ist das Aufnahmeteil, auch wenn zwischen ihm und den Schenkeln des U-förmigen Bügels sehr großes Spiel besteht, immer mittig zwischen den Schenkeln des U-förmigen Bügels gehalten, das heißt, der Spalt zwischen dem Aufnahmeteil und den Schenkeln des U-förmigen Bügels ist auf beiden Seiten des Aufnahmeteils immer gleich groß.

Weiterhin ist es vorteilhaft, wenn das Aufnahmeteil weitestgehend den gesamten Raum zwischen den Schenkeln des U-förmigen Bügels einnimmt. Bei einer solchen Lösung ist der Innenraum des Aufnahmeteils so groß wie möglich gestaltet, und somit ist es auch möglich, daß im Inneren des Aufnahmeteils angeordnete Kugelgelenk so groß wie möglich zu dimensionieren.

Ein weiterer Vorteil ist es, wenn die an äußere Seitenflächen der Schenkel angrenzenden Außenflächenabschnitte des Aufnahmeteils etwa bündig zu den äußeren Seitenflächen der Schenkel verlaufen. Dadurch besteht wegen fehlender Ecken und Kanten keine Verletzungsgefahr.

Bei einer besonders vorteilhaften Weiterbildung der Erfindung weist das Aufnahmeteil eine sehr einfache und kostengünstig herstellbare Form auf, wenn es aus einem zylinderförmigen Mittelteil, in welches die Öffnung für den Ansatz eingebracht ist, und aus zwei die Deckflächen des Zylinders bildenden, plattenförmigen Abschnitten besteht, in welche die als Aufnahme für die metallischen Scheiben dienenden Öffnungen eingebracht sind.

Ebenfalls ist es vorteilhaft, wenn zumindest die in Lichtaustrittsrichtung weisende Seitenfläche des Stegs so groß ausgeführt ist, daß sie sich bis zur Außenfläche des Aufnahmeteils hin erstreckt und der an die in Lichtaustrittsrichtung weisende Seitenfläche des Stegs angrenzende Abschnitt der Innenseite des Stegs der Form der Mantelfläche des zylinderförmigen Aufnahmeteils angepaßt ist. Dadurch besteht nicht nur von der Vorderseite des Scheinwerfers her gesehen zwischen dem Aufnahmeteil und dem Steg kein Raum, der leicht verschmutzen kann, sondern durch diese besondere Ausgestaltung erhöht sich auch die Festigkeit des U-förmigen Bügels.

Außerdem ist es vorteilhaft, wenn die metallische Hülse an beiden Seiten aus der Durchgangsöffnung des Ansatzes herausragt. Dadurch kann auch bei sehr großer Flächenpressung zwischen den Flächen der metallischen Hülse und den metallischen Scheiben der aus Kunststoff bestehende Ansatz des Scheinwerfers nicht beschädigt werden. In diesem Zusammenhang ist es weiterhin vorteilhaft, wenn die an der metallischen Hülse anliegenden metallischen Scheiben nach außen aus der sie aufnehmenden Öffnung des Aufnahmeteils herausragen. Dadurch ist sichergestellt, daß die Schenkel mit ihrer Innenseite ausschließlich an den metallischen Scheiben anliegen und nicht zusätzlich an dem zwischen den Schenkeln angeordneten Aufnahmeteil. Wäre letzteres gegeben, so könnte wegen der hohen Flächenpressung zwischen den Scheiben und dem Aufnahmeteil das Aufnahmeteil beschädigt werden.

Ferner ist es vorteilhaft, wenn zwischen der Hülse und der Durchgangsöffnung des Ansatzes eine Arretierungsvorrichtung besteht. Bei einer besonders vorteilhaften Ausgestaltung der Erfindung besteht die Arretierungsvorrichtung aus an die Mantelfläche der Hülse angebrachten erhabenen Arretierungselementen, welche in die Innenseite der Durchgangsöffnung gedrückt sind. Dadurch kann die Hülse sowohl in ihrer Längsrichtung als auch gegen Verdrehen in der Durchgangsöffnung des Ansatzes arretiert sein. Um die metallische Hülse gegen ein Verdrehen in der Durchgangsöffnung besonders gut zu sichern, ist es weiterhin sehr vorteilhaft, wenn die Arretierungsvorrichtung aus einer im Querschnitt ovalen Mantelfläche der metallischen Hülse oder einer Abflachung der Mantelfläche der Hülse und einer entsprechend geformten Durchgangsöffnung des Ansatzes besteht.

Weiterhin ist es vorteilhaft, wenn die konkave Fläche der metallischen Scheiben mit mindestens einem erhabenen Arretierungselement versehen ist, welches in die konvexe Fläche der Hülse eingedrückt ist und die an der Innenseite der Schenkel anliegende ebene Fläche der metallischen Scheibe mit einem an die Innenseite des Schenkels eingedrückten, erhabenen Arretierungselement versehen ist. Dadurch sind nicht nur die aneinanderliegenden kalottenförmigen Flächen des Kugelgelenks zueinander sehr fest arretiert, sondern auch die ebene Fläche der metallischen Scheiben zur Innenseite des Schenkels. Das erhabene Arretierungselement der ebenen Flächen der metallischen Scheiben kann auch durch eine rauhe Oberfläche gegeben sein.

Weiterhin ist es vorteilhaft, wenn die Wandstärke der Schenkel und des die Schenkel verbindenden Stegs durch in sie eingebrachte Vertiefungen nicht massiv aus Kunststoff hergestellt ist. Dadurch weist der Bügel keine Materialanhäufung und somit auf der Außenseite keine beim Erkalten des Materials entstehenden Einfallstellen auf und ist trotzdem sehr stabil ausgeführt. In diesem Zusammenhang ist es weiterhin vorteilhaft, wenn die sich gegenüberliegenden Innenseiten von Vertiefungen durch Versteifungsrippen miteinander verbunden sind.

Hierbei ist es weiterhin vorteilhaft, wenn der Kopf des Schraubenbolzens und die auf den Schraubenbolzen aufgeschraubte Mutter in einer entsprechend eingeformten Vertiefung des Schenkels des U-förmigen Bügels angeordnet sind. Dadurch vergrößert sich nicht die Außenabmessung des Halters in Längsrichtung des Schraubenbolzens gesehen, und die Mutter muß beim Eindrehen des Schraubenbolzens nicht durch ein Werkzeug gehalten werden. Weiterhin besteht wegen der in den Halter vollständig integrierten Einstellschrauben keine Verletzungsgefahr. Hierbei ist es weiterhin zweckmäßig, wenn zentral in die Innenseite des Stegs des U-förmigen Bügels eine Vertiefung eingebracht ist, an deren Boden der Kopf einer Befestigungsschraube anliegt, welche mit ihrem Schaft durch eine zentrale Öffnung durch den Boden der Vertiefung hindurchgeht. Hierbei baut der Halter wegen des in seinen Steg integrierten Kopfes der Befestigungsschraube nicht größer, jedoch ist der U-förmige Bügel wegen seiner großen Wandstärke sehr stabil. Hierbei ist es weiterhin vorteilhaft, wenn die den Schenkeln benachbarten Innenabschnitte des Stegs jeweils eine Vertiefung mit einer zentral in den Boden der Vertiefung eingebrachten Öffnung aufweisen. Dadurch ist es möglich, den bügelförmigen Halter auch mit Nieten, wie z. B. Blindnieten, an der Karosserie zu befestigen.

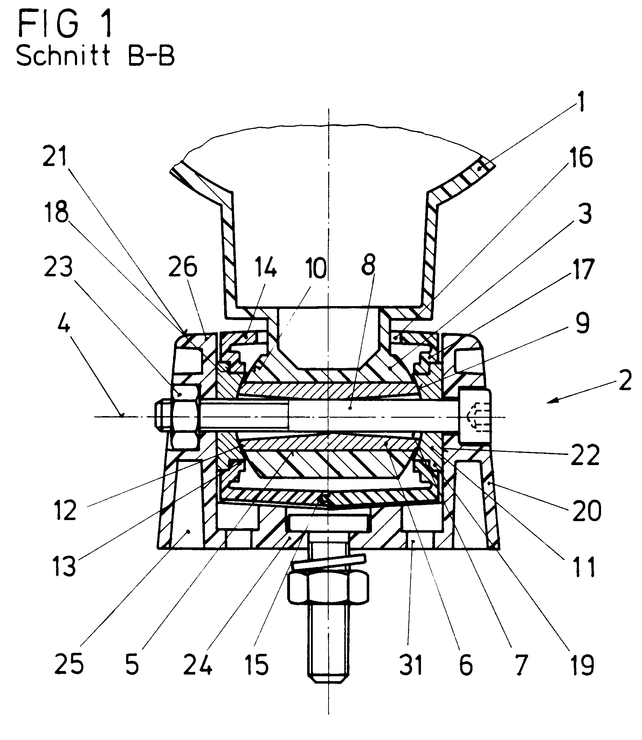

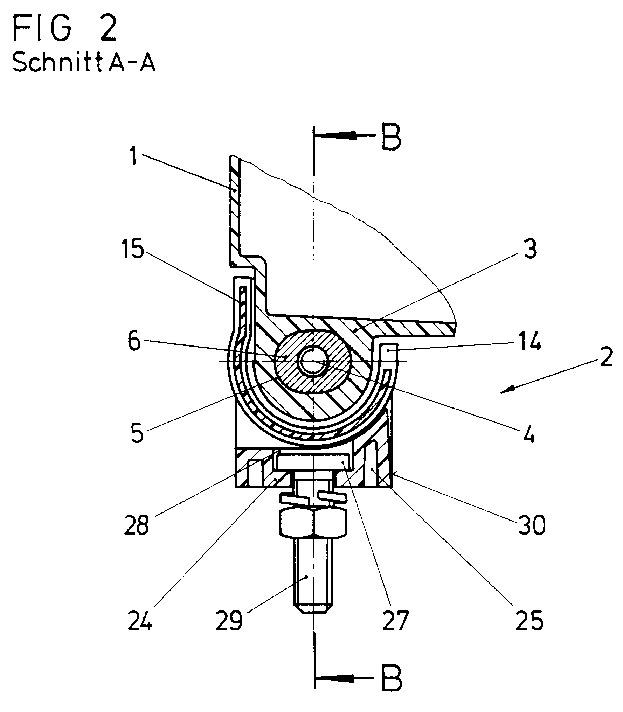

Ein Ausführungsbeispiel der Erfindung ist in der Zeichnung dargestellt, und zwar zeigt
- Figur 1: einen mittleren vertikalen Längsschnitt nach der Linie B-B der Figur 2 durch eine Anordnung zur verstellbaren Befestigung eines Fahrzeugscheinwerfers ohne den Scheinwerfer,
- Figur 2: einen Schnitt nach der Linie A-A und

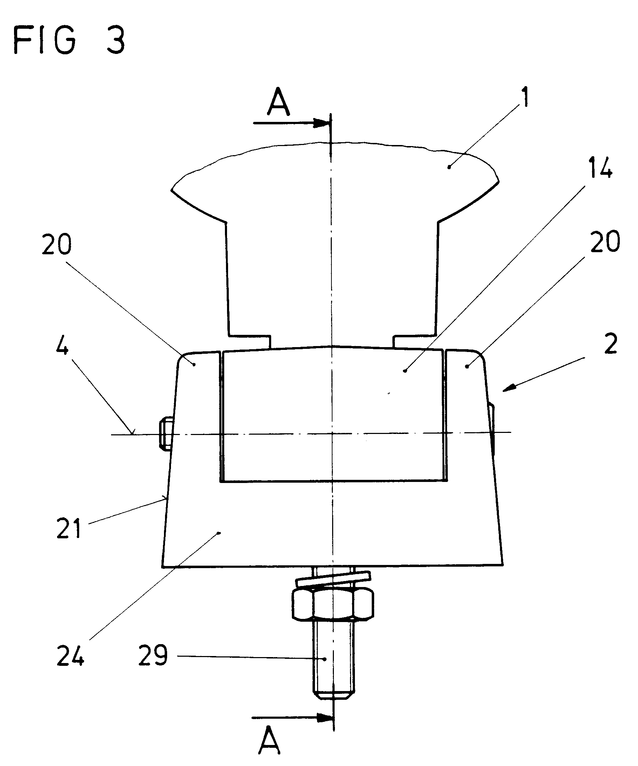

- Figur 3: eine von der Vorderseite des Scheinwerfers her gesehene Vorderansicht der Anordnung zur verstellbaren Befestigung eines Fahrzeugscheinwerfers.

Der Scheinwerfer besteht im wesentlichen aus einem aus Kunststoff hergestellten schalenförmigen Gehäuse (1), einem im Inneren des Gehäuses angeordneten schalenförmigen Reflektor (nicht dargestellt), einer das Innere des Gehäuses (1) und den Reflektor abdeckenden Lichtscheibe (nicht dargestellt) und einer Anordnung (2) zur verstellbaren Befestigung eines Fahrzeugscheinwerfers außen an der Karosserie. Als Anordnung (2) zur verstellbaren Befestigung eines Fahrzeugscheinwerfers dient ein mit der Außenseite des aus Kunststoff hergestellten Gehäuses (1) verbundener Halter. Der Halter (2) weist den an die Außenseite des aus Kunststoff hergestellten Gehäuses (1) angeformten Ansatz (3) auf. Der freie Endabschnitt des Ansatzes (3) ist kreiszylinderförmig gestaltet, wobei seine Längsachse (4) des Zylinders waagerecht und quer zur optischen Achse (4) des Scheinwerfers verläuft. Die Längsachse (4) deckt sich mit der Längsachse der in den Ansatz (3) eingebrachten Durchgangsöffnung (5), welche in ihrem Querschnitt oval verläuft. In diese Durchgangsöffnung (5) des Ansatzes ist die entsprechend geformte, aus Metall hergestellte Hülse (6) eingepreßt. Die Mantelfläche der Hülse (6) ist mit erhabenen Arretierungselementen (nicht dargestellt) versehen, welche in die Innenseite der Durchgangsöffnung (5) eingedrückt sind. Die Durchgangsöffnung (7) der metallischen Hülse (6) verjüngt sich ausgehend von ihren beiden offenen Seiten bis zu der Mitte der Hülse (6) hin, und die lichte Weite der Durchgangsöffnung (7) ist in der Mitte der Hülse (6) nur etwas größer als der Querschnitt des durch die Durchgangsöffnung (7) hindurchgehenden Schraubenbolzens (8). Die Durchgangsöffnung (7) der Hülse (6) weist bis auf ihre kleinste lichte Weite in der Mitte der Hülse (6) einen ovalen Querschnitt auf (nicht dargestellt). Verläuft in der Anbaulage des Scheinwerfers das Oval der Durchgangsöffnung (7) in seiner größten Längsausdehnung horizontal, so ist der Scheinwerfer um das kugelförmige Gelenk in horizontaler Richtung um einen größeren Winkel verstellbar als in vertikaler Richtung. Die Stirnflächen des kreiszylinderförmigen Ansatzes (3) und den Stirnflächen der aus beiden Seiten der Durchgangsöffnung (5) des Ansatzes (3) geringfügig herausragenden Hülse (6) sind die konvexen, kalottenförmigen Flächen (9) bzw. (10), deren gemeinsamer Mittelpunkt auf der Längsachse (4) liegt. An den konvexen, kalottenförmigen Flächen (9) der metallischen Hülse (6) liegt jeweils eine der aus Metall hergestellten, ringförmigen Scheiben (11) mit ihren entsprechend geformten konkaven Flächen (12) an. Die ringförmigen Scheiben (11) weisen eine dem Durchmesser des Schraubenbolzens (11) entsprechende zentrale Öffnung auf, mit welcher sie auf den Schraubenbolzen (11) aufgeschoben sind. Die metallischen Scheiben (11) sind jeweils in eine entsprechende Öffnung (13) des zweiteiligen Aufnahmeteils (14) angeordnet. Das Aufnahmeteil (14) dient als Schutzgehäuse für das von den kalottenförmigen Flächen (9) und (12) gebildete kugelförmige Gelenk. Die Trennebene der beiden Teile des zweiteiligen Aufnahmeteils (14) verläuft parallel zur optischen Achse des Reflektors und senkrecht zu der Längsachse (4). Das Aufnahmeteil (14) ist zylinderförmig ausgeführt und weist die in die Mantelfläche des Zylinders eingebrachte Öffnung (16) auf, durch welche der Ansatz (3) des Gehäuses (1) hindurchgeht. Der freie zylinderförmige Endabschnitt des Ansatzes (3), welcher im Inneren des Aufnahmeteils (14) angeordnet ist, ist länger ausgeführt als der Durchmesser der Öffnung (16) groß ist. Beim Zusammensetzen der beiden Teile des Aufnahmeteils (14) greifen die an ihren Anlageflächen angebrachten Steckelemente (15) ineinander. Die Steckelemente (15) bestehen aus einer in einer Anlagefläche eingebrachten Nut und aus einer an die andere Anlagefläche angeformten entsprechenden Rippe, welche in die Nut eingreift. Dadurch ist das Aufnahmeteil (14) in sich sehr steif ausgeführt. Weiterhin sind in der Zeichnung nicht dargestellte Steckelemente selbstrastend ausgeführt. Die Öffnungen (13) des Aufnahmeteils (14), welche zur Aufnahme der metallischen Scheiben (11) dienen, sind in die die Deckflächen des zylinderförmigen Aufnahmeteils (14) bildenden plattenförmigen Abschnitte (17) eingebracht. Die Öffnung (13) verjüngt sich zum Ansatz (3) hin durch eine Stufe in der Innenseite, deren Stoßfläche (18) nach außen gerichtet ist, an der die metallische Scheibe (11) mit einem radial nach außen gerichteten umlaufenden Flansch (19) anliegt. Das Aufnahmeteil (14) ist mit Spiel zwischen die Schenkel (20) des U-förmigen Bügels (21) eingesetzt. Die metallischen Scheiben (11) liegen mit ihrer den Schenkeln (20) zugewandten ebenen Fläche (22) an der senkrecht zur Schwenkachse (4) verlaufenden Innenseite der Schenkel (22) an. Der Schraubenbolzen (11) ist mit seinem Gewindeschaft durch eine Öffnung in den Schenkeln (20) hindurchgesteckt und liegt mit seinem Schraubenkopf an der Außenseite des einen Schenkels an, während auf der Außenseite des anderen Schenkels die auf den Gewindeschaft aufgeschraubte Mutter (23) anliegt. Nach dem Lösen des Schraubenbolzens kann der Scheinwerfer (1) durch das von den kalottenförmigen Flächen (9) und (12) gebildete kugelförmige Gelenk allseitig um einen bestimmten Winkel eingestellt werden. Entsprechend diesem Winkel ist die in das Aufnahmeteil (14) eingebrachte Öffnung (16) groß ausgeführt, und somit besteht zwischen ihrem Öffnungsrand und dem Ansatz ein umlaufender Spalt. Weiterhin ist entsprechend diesem bestimmten Winkel die konkave Fläche der metallischen Scheibe so groß ausgeführt, daß die konvexe, kalottenförmige Fläche (9) der Hülse (6) in jeder Stellung ganzflächig an der konkaven Fläche (12) der metallischen Scheibe anliegt. Der aus Kunststoff hergestellte U-förmige Bügel (21) ist durch die in seine Schenkel (20) und seinen Steg (24) eingebrachte Vertiefungen und an sie angeformte Rippen (26) nicht massiv aus Kunststoff hergestellt. In einer der Vertiefungen (25) ist weitestgehend der gesamte Kopf des Schraubenbolzens (8) und in einer andere Vertiefung die auf den Schraubenbolzen aufgedrehte Mutter (23) angeordnet. Diese Vertiefungen sind entsprechend des Kopfes des Schraubenbolzens (8) bzw. der Form der Mutter (23) in die Schenkel (20) eingeformt. In den die Schenkel (20) verbindenden Steg (24) ist von seiner Innenseite her die den Schraubenkopf (27) aufnehmende Vertiefung (28) eingebracht. In den Boden der Vertiefung ist eine Öffnung für den Durchgang des Gewindeschaftes des Schraubenbolzens (29) eingebracht. Mit diesem Schraubenbolzen (29) ist der Halter (2) an einem nicht dargestellten Karosserieteil festsetzbar. Die zur Vorderseite des Scheinwerfers hin gerichtete Seitenfläche (30) des Stegs (24) verläuft etwa bündig mit der an sie angrenzenden schmalen Seitenfläche der Schenkel (20) und erstreckt sich zum Scheinwerfer hin bis zur Mantelfläche des zylinderförmigen Aufnahmeteils (14) hin. Von der oberen Kante dieser Seitenfläche (30) ausgehend, ist die halbe Innenseite des Stegs der zylindrischen Mantelfläche des Aufnahmeteils (14) angepaßt. Seitlich der den Schraubenbolzen (29) aufnehmenden Öffnung des Stegs (24) ist jeweils eine im Durchmesser kleinere Öffnung (31) in den Steg (24) eingebracht, welche eine durch Niete, insbesondere Blindniete, alternative Befestigung des U-förmigen Bügels an der Karosserie gegenüber dem Schraubenbolzen ermöglicht.

## Patentansprüche

1. Anordnung zur verstellbaren Befestigung eines Fahrzeugscheinwerfers, außen an der Fahrzeugkarosserie, mit folgenden Merkmalen:
- ein aus Kunststoff hergestellter, U-förmiger Bügel (21) ist mit seinem die beiden Schenkel (20) verbindenden Steg (24) an der Fahrzeugkarosserie festsetzbar und umfaßt mit seinen Schenkeln (20) einen aus Kunststoff hergestellten und starr mit dem Scheinwerfer verbundenen Ansatz (3),
- eine quer zur optischen Achse des Scheinwerfers verlaufende Schwenkachse (4) ist durch einen von den Schenkeln (20) des U-förmigen Bügels (21) getragenen Schraubenbolzen (8) festgelegt, welcher durch eine einen größeren Durchmesser als der Schraubenbolzen (8) aufweisende Durchgangsöffnung (7) des Ansatzes (3) hindurchgeht,
- der Scheinwerfer ist durch ein kugelförmiges Gelenk, welches zwischen dem Ansatz (3) des Scheinwerfers und dem U-förmigen Bügel (21) besteht, allseitig um einen bestimmten Winkel verstellbar,
- das kugelförmige Gelenk ist gebildet durch jeweils eine den Schenkeln (20) des U-förmigen Bügels (21) zugewandte, konvexe, kalottenförmige Fläche (9) des Ansatzes (3) und einer den Schenkeln zugeordnete, konkave, kalottenförmige Fläche (12),
dadurch gekennzeichnet, daß
- zwischen dem Ansatz (3) und den beiden Schenkeln (20) des U-förmigen Bügels jeweils eine auf den Schraubenbolzen (8) aufgeschobene und aus Metall bestehende ringförmige Scheibe (11) angeordnet ist, die auf der dem Ansatz (3) zugewandten Seite die konkave, kalottenförmige Fläche (12) aufweist und auf der gegenüberliegenden Seite (22) flächig an einer senkrecht zur Schwenkachse (4) verlaufenden Fläche des Schenkels (20) anliegt,
- in die Durchgangsöffnung (5) des Ansatzes (3) eine metallische Hülse (6) eingesetzt ist, deren Stirnflächen (9) als konvexe, kalottenförmige Flächen ausgebildet sind, die mit den konkaven Flächen (12) der metallischen Scheiben (11) zusammenwirken,
- die metallischen Scheiben (11) in eine Öffnung (13) des aus Kunststoff hergestellten Aufnahmeteils (14) eingesetzt sind, welches eine den Ansatz (3) des Scheinwerfers umgebendes Schutzgehäuse bildet.

2. Scheinwerfer nach Anspruch 1, dadurch gekennzeichnet, daß der durch eine Öffnung (16) des Aufnahmeteils (14) in das Innere des Aufnahmeteils ragende Endabschnitt des Ansatzes (3) den Öffnungsrand hintergreift und zwischen dem Öffnungsrand und dem Ansatz (3) ein so großer Spalt besteht, daß der Scheinwerfer allseitig um den bestimmten Winkel verstellbar ist.

3. Anordnung nach Anspruch 1 oder 2, dadurch gekennzeichnet, daß das Aufnahmeteil einteilig aus weichem Werkstoff hergestellt ist.

4. Anordnung nach Anspruch 1 oder 2, dadurch gekennzeichnet, daß das Aufnahmeteil (14) zweiteilig ausgeführt ist.

5. Anordnung nach Anspruch 4, dadurch gekennzeichnet, daß die beiden Teile des zweiteiligen Aufnahmeteils (14) an ihren Anlageflächen ineinandergreifende Steckelemente (15) aufweisen.

6. Anordnung nach Anspruch 4 oder 5, dadurch gekennzeichnet, daß zumindest eine Verbindung zwischen den Steckelementen (15) selbstklemmend oder selbstrastend ausgeführt ist.

7. Anordnung nach Anspruch 4 bis 6, dadurch gekennzeichnet, daß die aneinanderliegenden Flächen des zweiteiligen Aufnahmeteils (14) in einer Fläche liegen, welche quer zur Schwenkachse (4) verläuft und zwischen den metallischen Scheiben (11) hindurchgeht.

8. Anordnung nach Anspruch 1 bis 7, dadurch gekennzeichnet, daß die metallischen Scheiben (11) in entsprechend große Öffnungen (13) des Aufnahmeteils (14) eingesetzt sind.

9. Anordnung nach einem der Ansprüche 1 bis 8, dadurch gekennzeichnet, daß die beiden metallischen Scheiben (11) von der Außenseite des Aufnahmeteils (14) her in die Öffnung (13) des Aufnahmeteils (14) eingesetzt sind und mit einem äußeren umlaufenden Flansch (19) an einer als Anschlag dienenden Schulter der Innenseite der Öffnung (13) des Aufnahmeteils (14) anliegen.

10. Anordnung nach einem der Ansprüche 1 bis 9, dadurch gekennzeichnet, daß zwischen dem Aufnahmeteil (14) und den Schenkeln (20) des U-förmigen Bügels (21) Spiel besteht.

11. Anordnung nach einem der Ansprüche 1 bis 10, dadurch gekennzeichnet, daß das Aufnahmeteil (14) weitestgehend den gesamten Raum zwischen den Schenkeln (20) des U-förmigen Bügels (21) einnimmt.

12. Anordnung nach Anspruch 11, dadurch gekennzeichnet, daß die an äußere Seitenflächen der Schenkel (20) angrenzenden Außenflächenabschnitte des Aufnahmeteils (14) etwa bündig zu den äußeren Seitenflächen der Schenkel (20) verlaufen.

13. Anordnung nach einem der Ansprüche 1 bis 12, dadurch gekennzeichnet, daß das Aufnahmeteil (14) aus einem zylinderförmigen Mittelteil, in welches die Öffnung (16) für den Ansatz (3) eingebracht ist, und aus zwei die Deckflächen des Zylinders bildenden, plattenförmigen Abschnitten besteht, in welche die als Aufnahme für die metallischen Scheiben (11) dienenden Öffnungen (13) eingebracht sind.

14. Anordnung nach einem der Ansprüche 1 bis 13, dadurch gekennzeichnet, daß zumindest die in Lichtaustrittsrichtung weisende Seitenfläche des Stegs (24) so groß ausgeführt ist, daß sie sich bis zur Außenfläche des Aufnahmeteils (24) hin erstreckt.

15. Anordnung nach Anspruch 14, dadurch gekennzeichnet, daß der an die in Lichtaustrittsrichtung weisende Seitenfläche (30) des Stegs angrenzende Innenseitenabschnitt des Stegs (24) der Form der Mantelfläche des zylinderförmigen Aufnahmeteils (14) angepaßt ist.

16. Anordnung nach einem der Ansprüche 1 bis 15, dadurch gekennzeichnet, daß die metallische Hülse (6) an beiden Seiten aus der Durchgangsöffnung (5) des Ansatzes (3) herausragt.

17. Anordnung nach einem der Ansprüche 1 bis 16, dadurch gekennzeichnet, daß die an der metallischen Hülse (6) anliegenden metallischen Scheiben (11) von außen aus der sie aufnehmenden Öffnung (13) des Aufnahmeteils (14) herausragen.

18. Anordnung nach einem der Ansprüche 1 bis 17, dadurch gekennzeichnet, daß zwischen der metallischen Hülse (6) und der Durchgangsöffnung (5) des Ansatzes (3) eine Arretierungsvorrichtung besteht.

19. Anordnung nach Anspruch 18, dadurch gekennzeichnet, daß die Arretierungsvorrichtung aus an die Mantelfläche der metallischen Hülse (6) angebrachten erhabenen Arretierungselementen besteht, welche in die Innenseite der Durchgangsöffnung (5) eingedrückt sind.

20. Anordnung nach Anspruch 18 oder 19, dadurch gekennzeichnet, daß die Arretierungsvorrichtung aus einer im Querschnitt ovalen Mantelfläche der metallischen Hülse (6) oder einer Abflachung der Mantelfläche der metallischen Hülse (6) und einer entsprechend geformten Durchgangsöffnung (5) des Ansatzes (3) besteht.

21. Anordnung nach einem der Ansprüche 1 bis 20, dadurch gekennzeichnet, daß die konkave Fläche (12) der metallischen Scheiben (11) mit mindestens einem erhabenen Arretierungselement versehen ist, welches in die konvexe Fläche (9) der metallischen Hülse (11) eingedrückt ist.

22. Anordnung nach einem der Ansprüche 1 bis 21, dadurch gekennzeichnet, daß die an der Innenseite der Schenkel (20) anliegende ebene Fläche (22) der metallischen Scheiben (11) mit einem in die Innenseite des Schenkels (20) eingedrückten erhabenen Arretierungselement versehen ist.

23. Anordnung nach einem der Ansprüche 1 bis 22, dadurch gekennzeichnet, daß die Wandstärke der Schenkel (20) und des die Schenkel (20) verbindenden Stegs (24) durch in sie eingebrachte Vertiefungen (25) nicht massiv aus Kunststoff hergestellt ist.

24. Anordnung nach Anspruch 23, dadurch gekennzeichnet, daß sich gegenüberliegende Innenseiten von Vertiefungen durch Versteifungsrippen miteinander verbunden sind.

25. Anordnung nach Anspruch 23, dadurch gekennzeichnet, daß der Kopf des Schraubenbolzens (8) und die auf den Schraubenbolzen (8) aufgeschraubte Mutter (23) in einer Vertiefung des Schenkels (20) des U-förmigen Bügels (21) angeordnet sind.

26. Anordnung nach einem der Ansprüche 23 bis 25, dadurch gekennzeichnet, daß zentral in die Innenseite des Stegs (24) des U-förmigen Bügels (21) eine Vertiefung (28) eingebracht ist, an deren Boden der Kopf (27) einer Befestigungsschraube (29) anliegt, welche mit ihrem Schaft durch eine zentrale Öffnung in den Boden der Vertiefung (28) hindurchgeht.

27. Anordnung nach einem der Ansprüche 23 bis 26, dadurch gekennzeichnet, daß die den Schenkeln (20) benachbarten Innenseitenabschnitte des Stegs jeweils eine Vertiefung mit einer zentral in den Boden der Vertiefung eingebrachten Öffnung (31) aufweisen.

## Claims

1. Arrangement for the adjustable fastening of a vehicle headlamp, on the outside of the vehicle body, with the following features:
- a U-shaped bracket (21) which is made of plastic can be fixed on the vehicle body by its cross-piece (24), which connects the two limbs (20), and with its limbs (20) encloses an extension (3) which is made of plastic and is connected rigidly to the headlamp,
- a swivelling axis (4) running transversely with respect to the optical axis of the headlamp is established by means of a screw bolt (8) which is supported by the limbs (20) of the U-shaped bracket (21) and passes through a through-opening (7) in the extension (3), which through-opening has a larger diameter than the screw bolt (8),
- the headlamp can be adjusted all-round by a given angle due to a ball-shaped joint which exists between the extension (3) of the headlamp and the U-shaped bracket (21),
- the ball-shaped joint is formed by a respective convex, spherical surface (9) of the extension (3), which surface faces the limbs (20) of the U-shaped bracket (21), and a concave, spherical surface (12) which is assigned to the limbs,
characterized in that
- a respective annular disc (11), which is pushed onto the screw bolt (8) and is made of metal, is arranged between the extension (3) and the two limbs (20) of the U-shaped bracket and on that side facing the extension (3) has the concave, spherical surface (12) and on the opposite side (22) bears flat against a surface of the limb (20), which surface runs perpendicularly with respect to the swivelling axis (4),
- inserted into the through-opening (5) in the extension (3) is a metallic sleeve (6), the end surfaces (9) of which are designed as convex, spherical surfaces which interact with the concave surfaces (12) of the metallic discs (11),
- the metallic discs (11) are inserted into an opening (13) in the receiving part (14) which is made of plastic and forms a protective housing surrounding the extension (3) of the headlamp.

2. Headlamp according to Claim 1, characterized in that the end portion, protruding into the interior of the receiving part through an opening (16) in the receiving part (14), of the extension (3) reaches behind the edge of the opening, and between the edge of the opening and the extension (3) there is a sufficiently large gap such that the headlamp can be adjusted all-round by the given angle.

3. Arrangement according to Claim 1 or 2, characterized in that the receiving part is produced in one part from yielding material.

4. Arrangement according to Claim 1 or 2, characterized in that the receiving part (14) is of two-part design.

5. Arrangement according to Claim 4, characterized in that the two parts of the two-part receiving part (14) have interlocking plug-in elements (15) on their bearing surfaces.

6. Arrangement according to Claim 4 or 5, characterized in that at least one connection between the plug-in elements (15) is of self-clamping or self-latching design.

7. Arrangement according to Claims 4 to 6, characterized in that the adjacent surfaces of the two-part receiving part (14) lie in an area which runs transversely with respect to the swivelling axis (4) and passes between the metallic discs (11).

8. Arrangement according to Claims 1 to 7, characterized in that the metallic discs (11) are inserted into correspondingly large openings (13) in the receiving part (14).

9. Arrangement according to one of Claims 1 to 8, characterized in that the two metallic discs (11) are inserted into the opening (13) in the receiving part (14) from the outside of the receiving part (14) and by means of an outer, peripheral flange (19) bear against a shoulder, serving as a stop, of the inside of the opening (13) in the receiving part (14).

10. Arrangement according to one of Claims 1 to 9, characterized in that there is play between the receiving part (14) and the limbs (20) of the U-shaped bracket (21).

11. Arrangement according to one of Claims 1 to 10, characterized in that the receiving part (14) occupies, to a very large extent, the entire space between the limbs (20) of the U-shaped bracket (21).

12. Arrangement according to Claim 11, characterized in that the outer surface portions of the receiving part (14), which portions adjoin the outer side surfaces of the limbs (20), run approximately flush with respect to the outer side surfaces of the limbs (20).

13. Arrangement according to one of Claims 1 to 12, characterized in that the receiving part (14) comprises a cylindrical central part, in which the opening (16) for the extension (3) is made, and two plate-shaped portions which form the top surfaces of the cylinder and in which the openings (13) which serve as the receiver for the metallic discs (11) are made.

14. Arrangement according to one of Claims 1 to 13, characterized in that at least that side surface of the cross-piece (24) which points in the light-exit direction is designed such that it is large enough to extend as far as the outer surface of the receiving part (14).

15. Arrangement according to Claim 14, characterized in that the inside portion of the cross-piece (24), which inside portion adjoins that side surface (30) of the cross-piece which points in the light-exit direction, is matched to the shape of the circumferential surface of the cylindrical receiving part (14).

16. Arrangement according to one of Claims 1 to 15, characterized in that the metallic sleeve (6) protrudes on both sides out of the through-opening (5) in the extension (3).

17. Arrangement according to one of Claims 1 to 16, characterized in that the metallic discs (11), which bear against the metallic sleeve (6), protrude outwards out of the opening (13), which receives them, in the receiving part (14).

18. Arrangement according to one of Claims 1 to 17, characterized in that there is a locking device between the metallic sleeve (6) and the through-opening (5) in the extension (3).

19. Arrangement according to Claim 18, characterized in that the locking device comprises raised locking elements which are fitted onto the circumferential surface of the metallic sleeve (6) and are pressed into the inside of the through-opening (5).

20. Arrangement according to Claim 18 or 19, characterized in that the locking device comprises a circumferential surface, which in cross-section is oval, of the metallic sleeve (6) or a flattened portion of the circumferential surface of the metallic sleeve (6) and a correspondingly shaped through-opening (5) in the extension (3).

21. Arrangement according to one of Claims 1 to 20, characterized in that the concave surface (12) of the metallic discs (11) is provided with at least one raised locking element which is pressed into the convex surface (9) of the metallic sleeve (11).

22. Arrangement according to one of Claims 1 to 21, characterized in that the planar surface (22) of the metallic discs (11), which surface bears against the inside of the limbs (20), is provided with a raised locking element pressed into the inside of the limb (20).

23. Arrangement according to one of Claims 1 to 22, characterized in that the wall thickness of the limbs (20) and of the cross-piece (24), which connects the limbs, (20) is made of plastic which is not in solid form due to recesses (25) made therein.

24. Arrangement according to Claim 23, characterized in that the mutually facing insides of recesses are connected to one another by reinforcing ribs.

25. Arrangement according to Claim 23, characterized in that the head of the screw bolt (8) and the nut (23) screwed onto the screw bolt (8) are arranged in a recess in the limb (20) of the U-shaped bracket (21).

26. Arrangement according to one of Claims 23 to 25, characterized in that made centrally in the inside of the cross-piece (24) of the U-shaped bracket (21) is a recess (28), against the base of which there bears the head (27) of a fastening screw (29) which passes with its body through a central opening in the base of the recess (28).

27. Arrangement according to one of Claims 23 to 26, characterized in that the inside portions of the crosspiece, which portions are adjacent to the limbs (20), each have a recess with an opening (31) made centrally in the base of the recess.

## Revendications

1. Dispositif pour la fixation réglable d'un phare de véhicule automobile à l'extérieur sur la carrosserie du véhicule, présentant les caractéristiques suivantes :
- un étrier en forme de U (21) en matière plastique est susceptible d'être fixé sur la carrosserie du véhicule avec sa traverse (24) reliant les deux bras (20), et entoure de ses bras (20) une embase (3) réalisée en matière plastique et reliée de façon rigide au phare,
- un axe de pivotement (4) s'étendant transversalement à l'axe optique du phare est déterminé par un boulon fileté (8) porté par un des bras (20) de l'étrier en forme de U (21), ledit boulon fileté (8) traversant une ouverture traversante (5) de l'embase (3) qui présente un diamètre supérieur au boulon fileté,
- le phare est susceptible d'être réglé de tous les côtés d'un angle déterminé grâce à une articulation sphérique qui se trouve entre l'embase (3) du phare et l'étrier en forme de U (21),
- l'articulation sphérique est formée par une surface (9) respective convexe en forme de calotte de l'embase (3), orientée vers les bras (20) de l'étrier en tonne de U (21) et par une surface (12) concave en forme de calotte associée aux bras (20),
caractérisé en ce que :
- entre l'embase (3) et les deux bras (20) de l'étrier en forme de U est agencé un disque (11) respectif annulaire en métal enfilé sur le boulon fileté, ledit disque présentant du côté orienté vers l'embase (3) la surface (12) concave en forme de calotte et étant appliqué de l'autre côté (22) à plat sur une surface du bras (20) perpendiculaire à l'axe de pivotement (4),
- dans l'ouverture de passage (5) de l'embase (3) est mis en place un manchon (6) métallique dont les faces frontales (9) sont réalisées comme des surfaces convexes en forme de calotte qui coopèrent avec les surfaces (12) concaves des disques (11) métalliques,
- les disques (11) métalliques sont mis en place dans une ouverture (13) de l'élément de réception (14) fabriqué en matière plastique, qui forme un boîtier de protection entourant l'embase (3) du phare.

2. Phare selon la revendication 1, caractérisé en ce que le tronçon d'extrémité de l'embase (3), qui fait saillie à travers une ouverture (16) de l'élément de réception (14) dans l'intérieur de l'élément de réception, saisit par l'arrière le bord de l'ouverture, et en ce qu'il se forme entre le bord de l'ouverture et l'embase (3) une fente qui est si grande que le phare peut être réglé de l'angle déterminé de tous les côtés.

3. Dispositif selon l'une ou l'autre des revendications 1 et 2, caractérisé en ce que l'élément de réception est réalisé d'une seule pièce en un matériau souple.

4. Dispositif selon l'une ou l'autre des revendications 1 et 2, caractérisé en ce que l'élément de réception (14) est réalisé en deux parties.

5. Dispositif selon la revendication 4, caractérisé en ce que les deux pièces de l'élément de réception (14) en deux parties présentent sur leurs surfaces d'appui des éléments d'enfichage (15) qui s'engagent les uns dans les autres.

6. Dispositif selon l'une ou l'autre des revendications 4 et 5, caractérisé en ce qu'au moins une liaison entre les éléments d'enfichage (15) est réalisée à auto-serrage ou à auto-encliquetage.

7. Dispositif selon les revendications 4 à 6, caractérisé en ce que les surfaces contiguës des deux pièces de l'élément de réception (14) sont situées dans un plan qui s'étend transversalement à l'axe de pivotement (4) et entre les disques (11) métalliques.

8. Dispositif selon les revendications 1 à 7, caractérisé en ce que les disques (11) métalliques sont mis en place dans des ouvertures (13) de taille correspondante de l'élément de réception (14).

9. Dispositif selon l'une quelconque des revendications 1 à 8, caractérisé en ce que les deux disques (11) métalliques sont mis en place dans l'ouverture (13) de l'élément de réception (14) depuis la face extérieure de l'élément de réception (14) et reposent au moyen d'une bride (19) circonférentielle extérieure sur un épaulement servant de butée de la face intérieure de l'ouverture (13) de l'élément de réception (14).

10. Dispositif selon l'une quelconque des revendications 1 à 9, caractérisé en ce qu'il est prévu un jeu entre l'élément de réception (14) et les bras (20) de l'étrier en forme de U (21).

11. Dispositif selon l'une quelconque des revendications 1 à 10, caractérisé en ce que l'élément de réception (14) occupe la quasi totalité de l'espace situé entre les bras (20) de l'étrier en forme de U (21).

12. Dispositif selon la revendication 11, caractérisé en ce que les tronçons de surface extérieure de l'élément de réception (14) qui sont adjacents aux faces latérales extérieures des bras (20) affleurent approximativement avec les surfaces latérales extérieures des bras (20).

13. Dispositif selon l'une quelconque des revendications 1 à 12, caractérisé en ce que l'élément de réception (14) est constitué par une partie médiane de forme cylindrique dans laquelle est ménagée l'ouverture (16) pour l'embase (3), et par deux tronçons en forme de plaques qui forment les surfaces de recouvrement du cylindre, les ouvertures (13) servant à recevoir les disques (11) métalliques étant ménagées dans lesdits tronçons.

14. Dispositif selon l'une quelconque des revendications 1 à 13, caractérisé en ce qu'au moins la face latérale de la traverse (24), orientée en direction de sortie de la lumière, est réalisée d'une taille telle qu'elle s'étend jusqu'à la surface extérieure de l'élément de réception (14).

15. Dispositif selon la revendication 14, caractérisé en ce que le tronçon de la face intérieure de la traverse (24), qui est adjacent à la face latérale (30) de la traverse, orientée en direction de sortie de la lumière, est adapté à la forme de la surface enveloppe de l'élément de réception (14) de forme cylindrique.

16. Dispositif selon l'une quelconque des revendications 1 à 15, caractérisé en ce que le manchon (6) métallique fait saillie des deux côtés en dehors de l'ouverture traversante (5) de l'embase (3).

17. Dispositif selon l'une quelconque des revendications 1 à 16, caractérisé en ce que les disques (11) métalliques en appui sur le manchon (6) métallique font saillie vers l'extérieur hors de l'ouverture (13) qui les reçoit de l'élément de réception (14).

18. Dispositif selon l'une quelconque des revendications 1 à 17, caractérisé en ce qu'un dispositif d'arrêt est prévu entre le manchon (6) métallique et l'ouverture traversante (5) de l'embase (3).

19. Dispositif selon la revendication 18, caractérisé en ce que le dispositif d'arrêt est constitué par des éléments d'arrêt en relief ménagés sur la surface enveloppe du manchon (6) métallique, qui sont pressés dans la face intérieure de l'ouverture traversante (5).

20. Dispositif selon l'une ou l'autre des revendications 18 et 19, caractérisé en ce que le dispositif d'arrêt est constitué par une surface enveloppe de section ovale du manchon (6) métallique ou par un aplatissement de la surface enveloppe du manchon (6) métallique, et par une ouverture traversante (5) de forme correspondante de l'embase (3).

21. Dispositif selon l'une quelconque des revendications 1 à 20, caractérisé en ce que la surface concave des disques (11) métalliques est pourvue d'au moins un élément d'arrêt en relief qui est enfoncé dans la surface (9) convexe du manchon (6) métallique.

22. Dispositif selon l'une quelconque des revendications 1 à 21, caractérisé en ce que la surface plane (22) des disques (11) métalliques, en appui sur la face intérieure des bras (20), est pourvue d'un élément d'arrêt en relief enfoncé sur la face intérieure du bras (20).

23. Dispositif selon l'une quelconque des revendications 1 à 22, caractérisé en ce que, grâce à des creux (25) ménagés dans l'épaisseur de paroi des bras (20) et de la traverse reliant les bras (20), ladite paroi n'est pas réalisée de façon massive en matière plastique.

24. Dispositif selon la revendication 23, caractérisé en ce que les faces intérieures en vis-à-vis des creux sont reliées l'une à l'autre par des nervures de renfort.

25. Dispositif selon la revendication 23, caractérisé en ce que la tête du boulon fileté (8) et l'écrou (23) vissé sur le boulon fileté (8) sont agencés dans un creux de forme correspondante du bras (20) de l'étrier en forme de U (21).

26. Dispositif selon l'une quelconque des revendications 23 à 25, caractérisé en ce qu'un creux (28) est ménagé au centre dans la face intérieure de la traverse (24) de l'étrier en forme de U (21), sur le fond duquel repose la tête (27) d'une vis de fixation (29) qui passe avec sa tige à travers une ouverture centrale à travers le fond du creux (28).

27. Dispositif selon l'une quelconque des revendications 23 à 26, caractérisé en ce que les tronçons intérieurs de la traverse, qui sont voisins des bras (20), présentent chacun un creux avec une ouverture (31) ménagée au centre dans le fond du creux.
